# EUROPÄISCHE PATENTSCHRIFT

(11) **EP 1 520 870 B1**
(45) Veröffentlichungstag und Bekanntmachung des Hinweises auf die Patenterteilung: **25.01.2006**
(21) Anmeldenummer: 03022337.4
(22) Anmeldetag: 04.10.2003
(51) Int. Cl.: C08G 77/00

(54) **Verfahren zur Herstellung von organischen Siliciumverbindungen**
Process for manufacturing organic silicon compounds
Procédé pour préparation des combinaisons organiques de silicium

(43) Veröffentlichungstag der Anmeldung: 06.04.2005
(73) Patentinhaber: Goldschmidt GmbH, 45127 Essen (DE)
(72) Erfinder: Knott, Wilfried, Dr., 45141 Essen (DE); Pott, Thomas, Dr., 45133 Essen (DE)

(56) Entgegenhaltungen:
- FR-A- 2 750 349
- US-A- 3 652 615
- US-A- 3 775 452
- US-A- 3 814 730
- US-A- 4 096 159
- US-A- 5 312 937
- US-A- 5 792 723
- US-A- 5 869 728
- US-A1- 2002 099 159
- US-A1- 2003 073 859
- US-B1- 6 376 569

## Beschreibung

Die Erfindung betrifft ein Verfahren zur Addition von Silanen oder Siloxanen, welche SiH-Gruppen aufweisen an Verbindungen mit olefinischen Doppelbindungen in Gegenwart eines gelösten Platin⁽⁰⁾-komplexkatalysators und mit einer aktivierenden Menge mindestens eines ungesättigten Kohlenwasserstoffes.

SiC-verknüpfte, organomodifizierte Siloxane, speziell Polyethersiloxane, stellen mit ihrem weit einstellbaren Tensidverhalten eine industriell sehr wichtige Stoffklasse dar. Der etablierte Weg zur Herstellung dieser Substanzen liegt in der Platinmetall-katalysierten Anlagerung SiH-Gruppen tragender Siloxane und Silane an olefinisch funktionalisierte Verbindungen, wie z.B. an Allylpolyether.

Die Verwendung von Platinkatalysatoren für die Anlagerung von Silanen oder Siloxanen mit SiH-Gruppen an Verbindungen mit einer oder mehreren olefinischen Doppelbindungen ist bekannt (Hydrosilylierung) und z.B. in dem Buch "Chemie und Technologie der Silicone", Verlag Chemie, 1960, Seite 43, und in der Patentliteratur, z.B. in der DE-A-26 46 726, der EP-A-0 075 703 und der US-A-3 775 452, beschrieben. In der heutigen betrieblichen Praxis haben sich überwiegend Hexachloroplatinsäure und cis-Diamminoplatin(II)chlorid durchgesetzt.

So einfach sich dieses Reaktionsprinzip beschreiben lässt, so kompliziert gestaltet sich oft dessen reproduzierbare Durchführung im industriellen Maßstab.

Einmal verläuft diese Anlagerungsreaktion nur dann ohne nennenswerte Bildung von Nebenprodukten, wenn die Verbindungen, welche olefinische Doppelbindungen aufweisen, frei von Gruppen sind, die in Konkurrenz zur Anlagerungsreaktion mit der SiH-Gruppe reagieren können. Hierzu ist insbesondere die an Kohlenstoff gebundene Hydroxylgruppe zu rechnen.

Zum anderen sind die erforderlichen Platinmetallmengen in Gewichtsteilen pro Million Gewichtsteile der Hydrosilylierungsmischung, um zu brauchbaren Ergebnissen zu kommen, häufig derart hoch, dass diese Verfahren wirtschaftlich uninteressant werden.

Insbesondere führen jedoch mangelnde SiH-Umsätze zu unerwünschtem Molekulargewichtsaufbau durch Neuknüpfung von SiOSi-Bindungen. Als Folge dieser Quervernetzung kann die Viskosität dieser Produkte nicht in den spezifizierten Bereichen gehalten werden.

Selbst aktive Katalysatorsysteme, wie z.B. diejenigen vom Karstedt-Typ (US 3 814 730), neigen bei der Herstellung organomodifizierter Siloxane, insbesondere der Allylpolyethersiloxane, zu Desaktivier- und Abschaltphänomenen, so dass sich oft die Notwendigkeit zur Nachkatalyse und/oder auch der drastischen Temperaturanhebung in der Anlagerungsreaktion ergibt.

Auch ist in manchen Fällen festgestellt worden, dass es für die Hydrosilylierung abträglich ist, wenn die bekannten Platinkatalysatoren oberhalb der normalen Katalysatorgewichtsanteile und/oder bei hohen Temperaturen verwendet werden. Durch diese verschärften Reaktionsbedingungen wird die Bildung umgelagerter Nebenprodukte forciert.

In der WO-A-98/00463 sind definierte feste Verbindungen mit hohen Zersetzungstemperaturen (144,3 °C und 138,4 °C) beschrieben, die, ausgehend vom Karstedt-Katalysator, durch Zugabe ausgewählter elektronenarmer Olefine ein aktives und zugleich stabiles Katalysatorsystem für die homogene Hydrosilylierung sein sollen. Die erhöhte Aktivität wird auf die Einführung starker π-Säure-Liganden, wie insbesondere Methylnaphtochinon bzw. Tetraethyltetracarboxylatoethylen, zurückgeführt.

In den angegebenen Beispielen wird Triethylsilan an Vinyltrimethylsilan angelagert, wobei die Olefinkomponente mit 100 % Überschuss zum Einsatz kommt. Trotz dieses hohen Überschusses und unter Berücksichtigung, dass die Vinylgruppe im Gegensatz zur Allylgruppe nicht isomerisierungsaktiv ist, schaltet hier die Katalyse unter Desaktivierung bei 50 °C nach 2 Stunden ab, wobei der SiH-Umsatz nur 68 % erreicht. Bei 73 °C zersetzt sich dieses Katalysatorsystem sofort und führt nur zu 18 % SiH-Umsatz (P Steffanut et al., Chem. Eur. J. 1998, 4, No. 10, Seite 2014) .

Alle eingangs genannten Maßnahmen zur Erhöhung des SiH-Umsatzes haben sich bislang nur nachteilig auf die erzielbaren Produktqualitäten im Hinblick auf sensorische und technische Eigenschaften ausgewirkt.

Die anwendungstechnische Nutzbarkeit von Produkten, die aus der Platinmetall-katalysierten Anlagerungsreaktion von SiH-Gruppen tragenden Siloxanen an olefinische Doppelbindungen aufweisende Verbindungen hervorgehen, ist insbesondere direkt verknüpft mit dem erzielten Umsatz in der Hydrosilylierung; d.h., der Minimierung von restlichen SiH-Funktionen. Rest-SiH führt zu unkontrollierbaren Hydrolyse- und Vernetzungsprozessen, die insbesondere im Falle von Anlagerungsverbindungen hohen Molekulargewichts zur Vergelung führen und die Produkte unbrauchbar machen.

Es hat in der Praxis nicht an Anstrengungen gefehlt, gerade auch im Falle der als Emulgatoren eingesetzten Alkylsiloxan-Polyethersiloxan-Copolymeren, die im Rahmen einer dreistufigen Anlagerungsreaktion hergestellt werden, restliche SiH-Funktionen durch eine Beaufschlagung der Reaktionsmatrix mit überschüssigem Ethylen als SiH-bindendes Hilfsolefin abzufangen.

Diese Maßnahme besitzt jedoch nicht die gewünschte Effizienz, so dass ca. 2 bis 3 % nichtumgesetzten Siliciumwasserstoffs (bezogen auf das Ausgangssiloxan) verbleiben. Erfahrungsgemäß ist ein derartiges Produkt nicht lagerstabil und erleidet Vergelung.

Besonders empfindliche Indikatoren für Abweichungen vom Qualitätsniveau sind z.B. diejenigen Allylpolyethersiloxane, die als Schaumstabilisatoren Eingang nehmen in die Herstellung von PU-Weichschäumen. Als anwendungstechnische Parameter sind die Aktivität und die Zellfeinheit Kriterien zur Beurteilung der Stabilisatorqualität. Verfahrensänderungen in der Stabilisatorherstellung, wie z.B. die Änderung der Katalysebedingungen während der SiC-Verknüpfungsreaktion, haben Einfluss auf die Schaumqualität.

Es besteht deshalb ein Bedürfnis nach einem Katalysator, der die Nachteile des Standes der Technik überwindet und einerseits eine hohe Aktivität in bezug auf die Anlagerung der SiH-Gruppen an olefinische Doppelbindungen aufweist, andererseits zu wenig Nebenreaktionen führt, wobei neben der vorgenannten Umlagerungsreaktion auch Konkurrenzreaktionen in Form der Reaktion der SiH-Gruppen mit OH-Gruppen der Polyether und auch Disproportionierungsreaktionen innerhalb der eingesetzten Silan- oder Siloxanverbindungen vermieden werden sollen. Hierunter ist eine Umverteilung der SiH-Gruppen in dem üblicherweise im Gemisch vorliegenden Silan bzw. Siloxan zu verstehen. Das zu lösende technische Problem definiert sich insbesondere auch darin, die SiC-Verknüpfungsreaktion bei niedrigen Temperaturen möglichst quantitativ und zuverlässig stabil auch in üblichen Stahlreaktoren durchführen zu können.

Überraschenderweise wurde nun gefunden, dass man alle eingangs diskutierten und dem Fachmann bei der SiC-Verknüpfungsreaktion geläufigen Schwierigkeiten beheben kann, wenn man die Hilfsolefine nicht nach beendeter Anlagerungsreaktion der Reaktionsmischung zusetzt, sondern vor der Zugabe von Platin⁽⁰⁾ -Komplexkatalysatorlösungen, insbesondere kommerziell erhältlichen Karstedt-Komplexen, diese mit wirksamen Mengen aktivierender C₂₋₆-Olefinen beaufschlagt, der Reaktionsmischung zusetzt und die Hydrosilylierung bei moderaten Temperaturen, vorzugsweise zwischen ca. 20 °C bis ca. 150 °C, insbesondere jedoch unterhalb ca. 60 °C durchführt. Man gewinnt so einen hochaktiven und handhabungssicheren Platin-Katalysator, der die angestrebte Reaktion ohne weitere zusätzliche Maßnahmen zum quantitativen SiH-Umsatz führt.

Ein Gegenstand der Erfindung ist daher ein Verfahren zur Herstellung von Polyorganosiloxanen und Polyorganosilanen hoher Reinheit durch Anlagerung von Siloxanen und/oder Silanen die mindestens eine H-Si-Gruppe enthalten, an Verbindungen mit olefinischen Doppelbindungen in Gegenwart eines Platinkatalysators und gegebenenfalls weiteren Zusatzkomponenten, welches dadurch gekennzeichnet ist, dass man die Umsetzung in Gegenwart eines Platin⁽⁰⁾-Komplexkatalysators, der vor der Zugabe in das Reaktionsmedium in einem Lösemittel gelöst und dessen Lösung mit einer wirksamen Menge mindestens eines ungesättigten Kohlenwasserstoffes mit 2 bis 6 C-Atomen versetzt wurde, durchführt.

Ein weiterer Gegenstand der Erfindung ist ein Verfahren zur Aktivierung von Platin⁽⁰⁾ -Komplexkatalysatoren, dadurch gekennzeichnet, dass Lösungen dieser Katalysatoren bei Temperaturen, die vorzugsweise im Bereich von ca. 0 °C bis ca. 30 °C liegen, mit einer wirksamen Menge mindestens eines ungesättigten Kohlenwasserstoffes mit 1 bis 6 C-Atomen, welcher vorzugsweise frei von elektronenziehenden Substituenten ist, versetzt werden.

Erfindungsgemäß ist die wirksame Mindestmenge definiert als die Menge an Olefin, die die Aktivität des eingesetzten Katalysators deutlich verbessert und es außerdem gestattet, die Reaktion in praxisgerechten Zeiten durchzuführen. Als Aktivität wird die Kombination aus niedriger Anspringtemperatur und die Fähigkeit der vollständigen Umsetzung der SiH-Verbindungen verstanden.

Die Mengen aktivierenden Olefins sind vorteilhafterweise so zu bemessen, dass die Starttemperatur der erfindungsgemäß beabsichtigten Hydrosilylierungsreaktion ca. 20 bis 30 °C unterhalb der Starttemperatur der Hydrosilylierungsreaktion liegt, die der Einsatz des nicht aktivierten Platin⁽⁰⁾-komplexkatalysators selbst ermöglicht. Insbesondere jedoch sind die Mengen so bemessen, dass die Reaktions(Additions)temperaturen im Bereich von ca. 20 bis 50 °C liegen, wobei Mengen, die Anspringtemperaturen des Katalysators unterhalb ca. 25 bis 30 °C bewirken, ganz besonders bevorzugt sind. Dieses ist bei Sättigungskonzentration des aktivierenden Olefins in dem jeweiligen Lösungsmittel in der Regel gewährleistet.

Die erfindungsgemäß für die Aktivierung mitverwendbaren Platin ⁽⁰⁾ -komplexkatalysatoren sind die zum Stand der Technik gehörenden Katalysatoren, insbesondere die bekannten Platinkomplexe von Siloxanen, Silanen, Organopolysiloxanen und Organosilanen mit ungesättigten Kohlenwasserstoffresten.

Karstedt-Komplexe sind erfindungsgemäß als Katalysatoren besonders bevorzugt. Als Referenz für diese Verbindungen sowie die Verfahren zu ihrer Herstellung wird auf die US-A-3 775 452 verwiesen. Erfindungsgemäß besonders bevorzugt sind Komplexe mit Divinyl-tetramethyl-disiloxanresten.

Darüber hinaus eignen sich aber auch andere stabile nullwertige Platin-Olefinkomplexe wie z.B. Bis-1,5-cyclooctadien-platin⁽⁰⁾ und Tris-norbornen-platin⁽⁰⁾, Di-platin-tris(heptadien-1,6), Platin-(η2,η2-1,2,6,7-heptadien-1,6)(η2-1,2-heptadien-1,6) und Platin-(η2-ethylen)(η2,η2-1,2,6,7-heptadien-1,6).

Die erfindungsgemäße Aktivierung der Katalysatoren wird vorzugsweise so durchgeführt, dass man eine 0,1 bis 10 %ige, vorzugsweise 0,5 bis 5 %ige, Lösung des Katalysators in einem Lösungsmittel bzw. Lösungsmittelgemisch vorlegt und vorzugsweise bei Raumtemperatur mit einem aktivierenden Olefin beaufschlagt und die Mischung ohne jede weitere Behandlung unmittelbar oder gegebenenfalls nach vorzugsweise gekühlter Lagerung in das Reaktandgemisch der Hydrosilylierung einträgt.

Als aktivierende Olefine werden erfindungsgemäß vorzugsweise Propen, Buten-1, Buten-2, Pentene, Hexene, Cyclohexen und insbesondere Ethylen eingesetzt. Darüber hinaus sind solche substituierten Ethylene als aktivierende Liganden geeignet, deren Substituenten der Houkschen Definition von X-Substituenten entsprechen (Elektronendonator-Substituenten) (Ian Fleming, Grenzorbitale und Reaktionen organischer Verbindungen, Verlag Chemie, Weinheim 1979, S. 137 und K. N. Houk, J. Am. Chem. Soc. 95, 4092 (1973)) .

Für den Fachmann ist dieser Befund völlig unerwartet, da dies im Gegensatz zu den Erfahrungen und Lehren des Standes der Technik steht. Die WO-A-98/00463 lehrt, dass man elektronenarme Olefine als Austauschliganden zur Aktivierung des Karstedtkomplexes heranziehen soll. Diese substituierten Ethylene entsprechen jedoch der Houkschen Definition von Z-Substituenten (Elektronenakzeptor-Substituenten) (loc.cit.).

Es wird angenommen, dass die im Rahmen des erfindungsgemäßen Verfahrens deutlich nachweisbare Aktivitätssteigerung, die sich insbesondere durch eine drastische Absenkung der Anspringtemperaturen in der Hydrosilylierung als auch in einer erhöhten Selektivität und in quantitativen SiH-Umsätzen zu erkennen gibt, hervorgerufen wird durch eine, mit der Olefinbeaufschlagung ausgelöste, Kaskade von Dissoziations- und Assoziationsprozessen, die neuartige Platin⁽⁰⁾-Spezies hervorbringen. Diese neuartigen Platin⁽⁰⁾-Komplexe wirken als erstaunlich aktive Katalysatoren und erschließen in einer für den Fachmann nicht vorhersehbaren Weise Möglichkeiten der technischen Realisation von Hydrosilylierungsreaktionen.

Die Zugabemenge an aktivierendem Olefinliganden bezogen auf die Lösung des Katalysators wird so gewählt, dass sie von der mindestwirksamen Konzentration bis zur Sättigungskonzentration des Olefins oder darüber hinaus in der Lösung des Katalysatorkomplexes liegt. Es wurde gefunden, dass die unter Normaldruck bei Raumtemperatur im System einstellbare Sättigungskonzentration des Olefins in dem jeweiligen Lösungsmittel mit Sicherheit zu einer ausreichenden Aktivierung des Katalysatorsystems führt.

Aus der jeweiligen Konzentration/Sättigungskonzentration ergibt sich das Verhältnis von ursprünglich eingesetztem Katalysator zum erfindungsgemäßen Katalysator. Die Sättigungskonzentration von Ethylen in verschiedenen organischen Lösungsmitteln wird beispielsweise beschrieben von A. Saghal, H. M. La und W. Hayduk in "Solubility of Ethylene in several Polar and Non-Polar-Solvents", The Canadian Journal of Chemical Engineering, Vol. 56, June 1978, p. 354-357.

Die jeweilige mindestwirksame Konzentration kann in dem betrachteten Katalysatorsystem durch einige einfache orientierende Versuche ermittelt werden.

Erfindungswesentlich ist es, die bekannten Katalysatoren des Standes der Technik mit einer ausreichenden Menge eines aktivierenden Olefins zu behandeln. Die Art und Weise sowie der Zeitpunkt und die Temperatur der Behandlung ist wenig kritisch und innerhalb weiter Grenzen variierbar.

Falls gewünscht oder aus betrieblichen oder technischen Gründen erforderlich, kann die oben dargelegte bevorzugte Vorgehensweise auf die jeweiligen technischen oder betrieblichen Belange abgewandelt werden. Beispielsweise kann man auch aktivierendes Olefin gemeinsam mit geringen Mengen des Reaktandsystems und gegebenenfalls mit einem oder mehreren Lösungsmitteln im Reaktor vorlegen und anschließend mit dem Katalysator versetzen. Diese In-Situ-Aktivierung kann wahlweise in einem Schritt oder durch kontrollierte Dosierung der Katalysatorvorstufe sukzessive erfolgen. Die hier beschriebene Vorgehensweise ist jedoch nicht bevorzugt, da sie immer größere Einsatzmengen aktivierenden Olefins benötigt.

Zur Einstellung der gewünschten katalytischen Aktivität und Selektivität können auch Mischungen aus zwei oder mehreren der aktivierenden Olefine verwendet werden. Aktivität und Selektivität beziehen sich erfindungsgemäß auf das jeweils zu katalysierende System.

Als erfindungsgemäß zu verwendende Lösungsmittel eignen sich alle unter Reaktionsbedingungen inerten organischen Solventien insbesondere Kohlenwasserstoffe, wie z.B. aliphatische, cycloaliphatische und gegebenenfalls substituierte aromatische Kohlenwasserstoffe wie z.B. Pentan, Hexan, Heptan, Cyclohexan, Methylcyclohexan, Dekalin, Toluol, Xylol etc.. Als Lösungsmittel können auch Edukte mitverwendet werden, sofern sie geeignet sind, ausreichende Mengen des Katalysators in homogener Lösung zu halten.

Die erfindungsgemäß aktivierten Katalysatorlösungen werden in den für Hydrosilylierungsreaktionen üblichen systemabhängigen Konzentrationen eingesetzt.

Die einzusetzende Menge an Platinkatalysator richtet sich im wesentlichen nach der Reaktivität und dem Molekulargewicht der Reaktionspartner. Im Allgemeinen verwendet man 10⁻² bis 10⁻⁸ Mol, vorzugsweise 10⁻³ bis 10⁻⁶ Mol der Katalysatoren auf jeweils 1 Mol SiH-Gruppen im Silan oder Siloxan.

Die erfindungsgemäß aktivierten Katalysatoren können über einen weiten Temperaturbereich eingesetzt werden. Zur Vermeidung der im Stand der Technik dargelegten produktschädigenden Nebenreaktionen wird vorzugsweise der Temperaturbereich so niedrig gewählt, dass er einen akzeptablen Kompromiss zwischen angestrebter Produktreinheit und Produktionsleistung darstellt. Die erfindungsgemäß bevorzugten Ethylen-aktivierten Systeme katalysieren überraschend unter schwacher Exothermie sehr zufriedenstellend bereits ab 20 °C. Zur Erzielung höherer Durchsatzraten kann die Umsetzungstemperatur auch erheblich erhöht werden (bis ca. 150 °C), ohne dass es zu Desaktivier- und Abschaltphänomenen kommt.

Die optimalen Reaktionstemperaturen liegen zum Teil erheblich unterhalb der im Stand der Technik erforderlichen Temperaturen bei Verwendung der bekannten technischen Katalysatorsysteme. So wird gemäß Stand der Technik beispielsweise ein Polysiloxan-Polyoxyalkylen-Blockmischpolymerisat im Einschrittverfahren bei ca. 100 °C unter Verwendung von Cis-Diamminoplatin(II)chlorid als Katalysator (10 ppm Platin bezogen auf den Gesamtansatz) hergestellt, während das erfindungsgemäß beanspruchte Katalysatorsystem bereits bei Reaktionstemperaturen ≤ 36 °C die Herstellung dieses PU-Weichschaumstabilisators ermöglicht (Beispiel 1) .

Erfindungsgemäß bevorzugt wird das Verfahren bei Normaldruck durchgeführt, davon abweichende Druckbereiche sind - falls erwünscht - jedoch ebenfalls möglich.

Die Reaktionspartner, d.h. die SiH-Gruppen aufweisenden Silane oder Siloxane sowie die olefinische Doppelbindungen aufweisenden organischen Verbindungen und Verfahren zu deren Herstellung sind bekannt. Die Silane oder Siloxane sind z.B. in dem Buch "Chemie und Technologie der Silicone", Verlag Chemie, 1960, beschrieben.

Beispiele geeigneter siliciumorganischer Verbindungen mit SiH-Gruppen sind:
- monomere Silane, wie z.B. R₃SiH; R₂SiH₂; RSiH₃;
- cyclische Silane, wie z.B. (RHSiO}₄; (RHSiO}₃;
- lineare oder verzweigte oligomere oder polymere Siloxane wie
   R₃SiO- (R₂SiO-)ₐ (RSi (H) O-) _{b}SiR₃ wobei a ≥ 0 und b ≥ 1 ist;
   HR₂SiO-(R₂SiO-)_{c}(RSi(H)O-)_{d}SiR₂H, wobei c und d ≥ O sind;

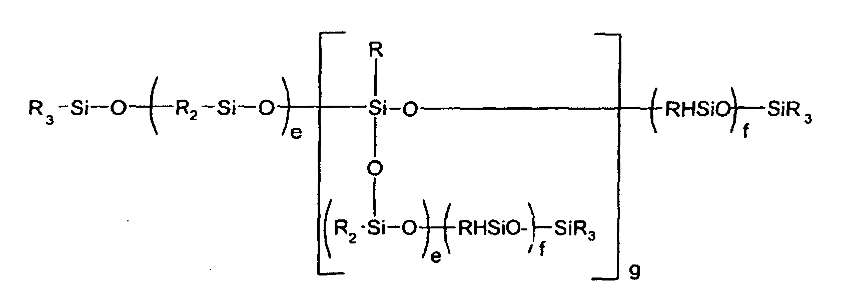

worin
e ≥ 0,
f ≥ 1 und
g ≥ 1
ist.

Dabei bedeutet R in den vorgenannten Formeln Gruppen, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe. Dabei kann innerhalb eines Moleküls R auch verschiedene Bedeutungen haben. Bevorzugt sind jedoch Verbindungen, bei denen alle Reste R oder deren überwiegende Zahl die Bedeutung eines Methylrestes haben.

Beispiele geeigneter kohlenstofforganischer Verbindungen mit olefinischen Doppelbindungen sind Verbindungen der Formeln

CH₂=CH-CH₂-O- (CH₂-CH₂O-)ₓ-CH₂-CH (R')O-)_{y}(SO)_{z}-R"

CH₂=CH-O- (CH₂-CH₂O-)ₓ-CH₂-CH (R') O-)_{y}-R"

CH₂=CH-CH₂-R^{IV}

CH₂=CH- (O)_{x'} -R^{IV}

worin
x = 0 bis 100,
x' = 0 oder 1,
y = 0 bis 100,
z = 0 bis 100,

- R': eine gegebenenfalls substituierte Alkylgruppe mit 1 bis 4 C-Atomen ist und
- R": einen Wasserstoffrest oder eine Alkylgruppe mit 1 bis 4 C-Atomen; die Gruppe -C (O) -R'" mit R'" = Alkylrest; die Gruppe -CH₂-O-R'; eine Alkylarylgruppe, wie die Benzylgruppe; die Gruppe -C(O)NH-R' bedeutet.
- R^{IV}: ein gegebenenfalls substituierter Kohlenwasserstoffrest mit 7 bis 47, vorzugsweise 13 bis 37 C-Atomen,
- SO: der Rest C₆H₅-CH (-) -CH₂-O-
bedeutet.

Ferner sind beispielsweise Verbindungen der Formeln 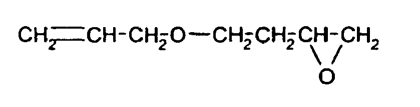 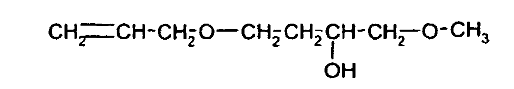 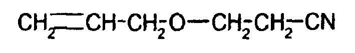 geeignet.

Die erfindungsgemäß aktivierten Katalysatoren haben gegenüber den im Stand der Technik beschriebenen Katalysatorsystemen insbesondere folgende Vorteile:
a) Der aktivierte Katalysator zeigt bereits ab einer Temperatur von 20 °C eine Katalyseaktivität, wie sie bei anderen Hydrosilylierungskatalysatoren nur bei deutlich höheren Temperaturen beobachtet wird. Für die betriebliche Praxis ist diese Eigenschaft von besonderer Bedeutung, da bei der Durchführung von Produktionsansätzen auf lange und kostenintensive Aufheiz- und Abkühlphasen verzichtet werden kann. Diese Zeiteinsparung erhöht entscheidend die Anlagenkapazität, damit die Produktivität und somit die Wirtschaftlichkeit.
b) Einhergehend mit den vergleichsweise niedrigen Reaktionstemperaturen, die der Einsatz des erfindungsgemäß aktivierten Katalysators gestattet, werden thermodynamisch begünstigte Nebenreaktionen stark zurückgedrängt, was sich in der Qualität der gewonnenen Reaktionsprodukte zeigt. Man beobachtet z.B. in Reaktionssystemen, die einer Allyl-Propenyl-Umlagerung zugänglich sind, eine stark verminderte Bildung des Abbauproduktes Propionaldehyd. Diese geminderte Nebenreaktion verbessert nicht nur die olfaktorische Qualität der erhaltenen Produkte (Vermeidung des manchmal durch die Aldehydbehaftung hervorgerufenen, beißenden Geruchs), sondern hilft z.B. im Falle der hydroxyfunktionellen Siliconpolyether auch, unerwünschten Molekulargewichtsaufbau durch Acetalbildung am Aldehyd zu vermeiden. Die Viskositätsstabilität der Produkte und damit ihr rheologisches Verhalten in der jeweiligen Anwendung wird somit sichergestellt.
c) Der erfindungsgemäß aktivierte Katalysator ist über einen sehr weiten Temperaturbereich mit Erfolg einzusetzen, ohne dass man einen Aktivitätsverlust oder Abschaltphänomene registriert. Diese Flexibilität in bezug auf die zu wählende Reaktionstemperatur gestattet auch die Anlagerung SiH-Gruppen-tragender Verbindungen an konventionell kinetisch gehemmte olefinische Substrate. Für die Herstellung anspruchsvoller SiC-Verknüpfungsprodukte im betrieblichen Maßstab, bei denen 2 oder mehrere olefinische Substrate im mehstufigen Verfahren angelagert werden, ist es ferner unerlässlich, dass Reaktionsansätze, die im Zudosierverfahren durchgeführt werden, keinen unerwünschten Aufbau von Reaktandkonzentrationen (Reaktandkumulation) im Kessel zeigen. Unkontrollierbare, plötzliche Exothermien insbesondere im Falle der SiH-reichen Systeme können sonst kritische, Produktqualität und Arbeitssicherheit gefährdende Betriebszustände auslösen. Der Einsatz des erfindungsgemäß beanspruchten Katalysators erhöht daher die Betriebssicherheit.
d) Für eine gesicherte Lagerstabilität von Siliconpolyether-Copolymeren, insbesondere von Alkylsiloxan-Polyethersiloxan-Copolymeren ist neben der bereits diskutierten Vermeidung von Acetalstrukturen eine Erzielung möglichst quantitativen SiH-Umsatzes zwingend erforderlich. Anderenfalls führen nichtkontrollierbare Hydrolyse- und Kondensationsreaktionen an den ursprünglich SiH-Funktionen-tragenden Molekülen zu einem rapiden Molekulargewichtsaufbau, der relativ rasch vergelte Produkte hervorbringt und zum Teil beträchtlichen wirtschaftlichen Schaden hervorruft. Der erfindungsgemäße Katalysator leistet selbst in einem 3-stufigen Hydrosilylierungsprozess (ohne die bei Verwendung der nichtaktivierten Katalysatoren des Standes der Technik üblichen und zwingend erforderlichen Überschüsse an Verbindungen mit olefinischen Doppelbindungen) diese quantitative SiC-Verknüpfung, wie Beispiel 5 darlegt.
e) Nach beendeter Anlagerungsreaktion durch den Katalysatoreintrag zeigen die mit dem erfindungsgemäß aktivierten Katalysator hergestellten Produkte keine durch den Katalysator hervorgerufene unerwünschte Eigenfärbung.
f) Bei der Herstellung der als Polyurethan-Weichschaumstabilisatoren eingesetzten komplexen Siliconpolyether stellt der erfindungsgemäß aktivierte Katalysator seine ungewöhnliche Leistungsfähigkeit dadurch unter Beweis, dass er im direkten vergleich mit Katalysatoren des Standes der Technik neben einer zügigen Anlagerungsreaktion bei tiefen Temperaturen auch sehr gute Produkteigenschaften im Hinblick auf Aktivität und Zellstruktur sichert (Beispiele 1 bis 3).

Das erfindungsgemäß beanspruchte Verfahren eignet sich zur Herstellung von SiC-verknüpften Systemen, die Anwendung finden im Bereich der Polyurethan-Schaumstabilisatoren (z.B.: Heißweichschaum, Hartschaum, Kaltschaum, Esterschaum, etc.), die Anwendung finden als Trennmittel (Siliconwachse, strahlenhärtende Systeme wie z.B. Siliconacrylate, etc.), die Anwendung finden in Lackadditiven als Entschäumer, Entlüfter, Gleit- und Verlaufsadditive, in Anwendungen von Netzmitteln, in kosmetischen Formulierungen für Verdicker, Emulgatoren, etc.

Das erfindungsgemäße Verfahren wird durch die folgenden Beispiele noch näher erläutert. Dabei werden die in den Beispielen genannten prozentualen SiH-Umsätze indirekt bestimmt, indem man das erhaltene Reaktionsprodukt mit Natriumbutylat in n-Butanol behandelt und die Menge noch abspaltbaren Wasserstoffs volumetrisch bestimmt.

### Beispiele:

### Erfindungsgemäße Aktivierung eines handelsüblichen Katalysators:

10 ml einer 1 %igen toluolischen Lösung handelsüblichen Karstedt-Katalysators [H₂C=CH-Si (CH₃)₂-O-Si (CH₃)₂-CH=CH₂]₃Pt₂ werden bei 25 °C über einen Zeitraum von 5 Minuten durch Einleiten mit Ethylen gesättigt.

### Beispiel 1 (erfindungsgemäß):

### Herstellung eines Polysiloxan-Polyoxyalkylen-Blockmischpolymerisats (PU-Weichschaumstabilisator):

In einem Argon inertisierten Kolben, der mit Rührer, Thermometer und Rückflußkühler versehen ist, werden 80,2 g eines Polyethers mit der mittleren Formel:

CH₂=CH-CH₂O- (C₂H₄O)₃ (C₃H₆O)₂₉-CH₃

15,1 g eines Polyethers mit der mittleren Formel:

CH₂=CH-CH₂O- (C₂H₄O)₁₁ (C₃H₆O)₁₆-CH₃

40,5 g eines Polyethers mit der mittleren Formel:

CH₂=CH-CH₂O- (C₂H₄O) ₃₁ (C₃H₆O) -CH₃

115,8 g eines Polyethers mit der mittleren Formel:

CH₂=CH-CH₂O- (C₂H₄O) ₃₁ (C₃H₆O) ₄₂-OH

gemeinsam mit 60 g eines Siloxans mit der durchschnittlichen Formel:

(CH₃) ₃SiO- [ (CH₃) ₂SiO-]₇₀- [ (CH₃) HSiO-] ₇- Si (CH₃) ₃

bei 25 °C unter Rühren vorgelegt und mit 0,35 ml (8 ppm Platin) in Form des obigen erfindungsgemäß hergestellten Katalysators versetzt. Die aus Polyethern und Wasserstoffsiloxan bestehende Reaktionsmatrix ist anfänglich zweiphasig und trübe.

Innerhalb weniger Minuten steigt die Temperatur der Reaktionsmischung auf 36 °C. Nach ca. 35 Minuten erreicht das zuvor trübe Reaktionsgemisch den Klarpunkt, der optisch leicht erkennbar das Reaktionsende indiziert. Ergänzend belegt eine gasvolumetrische SiH-Bestimmung (Zersetzung einer eingewogenen Probe an der Gasbürette mit Hilfe einer Natriumbutylat-Lösung) quantitativen Umsatz.

### Beispiel 2 (Vergleichsbeispiel):

### Herstellung eines Polysiloxan-Polyoxyalkylen-Blockmischpolymerisats (PU-Weichschaumstabilisator):

Auf die Edukte des Beispiels 1 zurückgreifend, werden in einem Argon-inertisierten Kolben, der mit Rührer, Thermometer und Rückflußkühler versehen ist, 80,2 g eines Polyethers mit der mittleren Formel:

CH₂=CH-CH₂O- (C₂H₄O) ₃ (C₃H₆O) ₂₉-CH₃

15,1 g eines Polyethers mit der mittleren Formel:

CH₂=CH-CH₂O- (C₂H₄O) ₁₁ (C₃H₆O)₁₆-CH₃

40,5 g eines Polyethers mit der mittleren Formel:

CH₂=CH-CH₂O- (C₂H₄O) ₃₁ (C₃H₆O) -CH₃

115,8 g eines Polyethers mit der mittleren Formel:

CH₂=CH-CH₂O- (C₂H₄O) ₃₁ (C₃H₆O) ₄₂-OH

gemeinsam mit 60 g eines Siloxans mit der durchschnittlichen Formel:

(CH₃)₃SiO- [(CH₃)₂SiO-]₇₀- [(CH₃) HSiO-]₇- Si (CH₃)₃

bei 25 °C unter Rühren vorgelegt und mit 0,43 ml (12 ppm Platin) in Form des Karstedt-Katalysators [H₂C=CH-Si(CH₃)₂-O-Si(CH₃)₂-CH=CH₂]₃Pt₂ versetzt. Nach 110 Minuten (Temperaturerhöhung 7 °C) wird der Klarpunkt der Reaktionsmischung erreicht und nach 120 Minuten Gesamtreaktionszeit ein gasvolumetrischer SiH-Umsatz von 98 % festgestellt.

### Beispiel 3 (Vergleichsbeispiel):

### Herstellung eines Polysiloxan-Polyoxyalkylen-Bloclanischpolymerisats (PU-Weichschaumstabilisator):

In Analogie zu Beispiel 1 und 2, wird der dort beschriebene Reaktionsansatz mit 0,47 ml (13 ppm Pt) in Form des 2-Methylnaphtochinon-divinyltetramethyldisiloxan-platin⁽⁰⁾-komplexes (Herstellung gemäß WO-A-98/00463, S. 15 bis 17 oben) versetzt. Nach 140 Minuten, wobei nur eine Temperaturerhöhung von 3 °C verzeichnet wird, erreicht der Reaktionsansatz mit dem Durchlaufen des Klarpunkts quantitativen Umsatz.

Die anwendungstechnische Prüfung der hergestellten Schaumstabilisatoren erfolgt mit einer Schaumrezeptur auf folgende Weise:

Jeweils 300 Teile eines handelsüblichen Polyethers zur Herstellung von flexiblen Polyurethanschaumstoffen, welcher im mittleren Molekül drei Hydroxylgruppen aufweist und ein Molekulargewicht von 3.500 hat, wird mit 15 Teilen Wasser, 15 Teilen eines üblichen physikalischen Treibmittels, der entsprechenden Menge des zu untersuchenden Schaumstabilisators, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 : 1) wird mit einem Glattrührer 7 Sekunden bei 2.500 U/Min. gerührt und das Gemisch in einen oben offenen Kasten gegossen. Es entsteht ein feinporiger Schaumstoff, der durch folgende Parameter charakterisiert wird:
1. das Rücksacken des Schaumstoffes am Ende der Steigphase (den sogenannten "Rückfall"),
2. die Zahl der Zellen pro Zentimeter Schaum, die man mikroskopisch ermittelt.

Folgende Tabelle gibt einen Überblick über die Syntheseparameter der nach den beiden nichterfindungsgemäßen sowie nach dem Ausführungsbeispiel 1 gewonnenen Stabilisatoren und stellt die Meßwerte des Rückfalls für 2 verschiedene Konzentrationen (1,8 Teile/1,5 Teile) gegenüber:

| | C_{Pt} [ppm] | t_{Klarpunkt} [min] | ΔT [°C] | Umsatz [%] | Rückfall [cm] | Zellen pro Zentimet er |
|---|---|---|---|---|---|---|
| Ausführungsbeispiel 1 | 8 | 35 | 11 | 100 | 0,5/1,5 | 14 |
| Vergleichsbeispiel 2 | 12 | 110 | 7 | 98 | 0,9/2,7 | 8 |
| Vergleichsbeispiel 3 | 13 | 140 | 3 | 100 | 0,7/1,7 | 12 |

Bemerkenswert und für den Fachmann überraschend, gestaltet sich die Ermittlung der Zellenzahl im Falle des Polyurethanweichschaumes, der mit dem nach der erfindungsgemäßen Lehre gewonnenen Siliconpolyether stabilisiert wird. Die Morphologie der Zellen ist hier so einheitlich, dass man zur Bestimmung der Zellenzahl pro Zentimeter auf die sonst erforderliche Mittelwertbildung verzichten kann.

### Beispiel 4:

### Herstellung eines Polydimethylsiloxan-Allylglycidylether-Additionsproduktes:

In Analogie zu Beispiel 1 werden in einem Rundkolben 238,4 g eines linearen α,ω-Diwasserstoffpolydimethylsiloxans (Kettenlänge N = 80) mit 11,6 g Allylglycidylether unter Rühren bei 25 °C vorgelegt und mit 0,25 ml (9 ppm Pt) des erfindungsgemäß hergestellten Katalysators versetzt. Bereits nach 15 Minuten ist die Temperatur der Reaktionsmatrix auf 40 °C gestiegen. Gasvolumetrische SiH-Bestimmung belegt quantitativen Umsatz.
Ein unter betrieblichen Praxisbedingungen gefahrener Ansatz (Katalysator: Cis-Diamminoplatin(II)chlorid (10 ppm Platin bezogen auf den Gesamtansatz), 120 °C Reaktionstemperatur) benötigt 1 bis 3 Stunden zur Vervollständigung der Reaktion.

### Beispiel 5:

### Herstellung eines Alkylsiloxan-Polyethersiloxan-Copolymeren:

In einem Argon-inertisierten, mit KPG-Rührer, Tropftrichter und Rückflußkühler ausgestatteten Mehrhalskolben werden 60 g eines seitständige SiH-Gruppen tragenden Siloxans der mittleren Zusammensetzung MD₇₅D^{H}₂₅M (SiH-Gehalt: 3,6 Val/kg) mit 0, 18 ml der erfindungsgemäß hergestellten Katalysatorlösung (12 ppm Pt) bei 25 °C versetzt. Innerhalb von 18 Minuten werden 21 g Hexadecen zugetropft, so dass die Reaktionswärme die Ansatztemperatur auf 64 °C steigen lässt. Innerhalb von 10 Minuten werden dann 35,6 g eines Polyethers der mittleren Zusammensetzung CH₂=CH-CH₂O- (C₂H₄O)₈-OH (Jodzahl: 62 g Jod/100 g) zügig zugetropft, wobei die Reaktionstemperatur auf 50 °C sinkt. Nach beendeter Zugabe werden weitere 10,9 g Hexadecen innerhalb von 10 Minuten hinzugegeben. Gasvolumetrische SiH-Bestimmung an einer Probe des erkalteten Reaktionsansatzes belegt quantitativen Umsatz.

### Beispiel 6:

### Herstellung eines Trisiloxannetzmittels:

In einem inertisierten Mehrhalsrundkolben ausgerüstet mit KPG-Rührer, Rückflußkühler und Tropftrichter werden 142,9 g eines Polyethers der mittleren Zusammensetzung CH₂=CH-CH₂O- (C₂H₄O)₈-OCH₃ (Jodzahl: 62 g Jod/ 100 g) bei 23 °C unter Rühren vorgelegt und mit 0,23 ml (10 ppm) des erfindungsgemäß hergestellten Katalysators versetzt. Im Verlauf von 30 Minuten werden 60 g eines ca. 74 %igen Heptamethyltrisiloxans (Rest besteht aus höheren Homologen) zugetropft, so dass die Temperatur des Reaktionsansatzes 38 °C erreicht. Nach beendeter Zudosierung lässt man ca. 1 Stunde nachrühren und bestimmt aus einer Probe des erkalteten Ansatzes einen gasvolumetrischen SiH-Umsatz > 99 %.

### Beispiel 7:

### Herstellung eines Silicontrennwachses:

In Analogie zu Beispiel 1 werden in einem Rundkolben 337,5 g α-Olefin C30+ mit 28,9 g 1-Hexadecen in 337,5 g des Isoparaffins Cobersol© B56 unter Rühren bei 57 °C vorgelegt und mit 0,6 ml (10 ppm Pt) des erfindungsgemäß hergestellten Katalysators versetzt. Zu dieser Mischung werden über einen Zeitraum von 15 min 150 g eines seitständig SiH-Gruppen tragenden Siloxans der mittleren Formel MD_{1,75}D^{H}_{1,25}M zugetropft, wobei die Temperatur der Reaktionsmatrix auf 69 °C ansteigt. Gasvolumetrische SiH-Bestimmung ergibt einen Umsatz von 93,7 % nach 2 h bzw. 97,2 % nach 3 h und 98,8 % nach 4 h.

## Patentansprüche

1. Verfahren zur Herstellung von Polyorganosiloxanen und Polyorganosilanen hoher Reinheit durch Anlagerung von Siloxanen und/oder Silanen, die mindestens eine H-Si-Gruppe enthalten, an Verbindungen mit olefinischen Doppelbindungen in Gegenwart eines Platinkatalysators und gegebenenfalls weiteren Zusatzkomponenten, **dadurch gekennzeichnet, dass** man die Umsetzung in Gegenwart eines Platin⁽⁰⁾-Komplexkatalysators durchführt, der vor der Zugabe in das Reaktionsmedium in einem Lösemittel gelöst und dessen Lösung mit einer wirksamen Menge mindestens eines ungesättigten Kohlenwasserstoffes mit 2 bis 6 C-Atomen versetzt wurde.

2. Verfahren nach Anspruch 1, **dadurch gekennzeichnet, dass** man als ungesättigte Kohlenwasserstoffe niedermolekulare Sifreie Olefine mit 2 bis 6 C-Atomen, welche frei von elektronenziehenden Substituenten sind, einsetzt.

3. Verfahren nach mindestens einem der Ansprüche 1 oder 2, **dadurch gekennzeichnet, dass** man als ungesättigte Kohlenwasserstoffe Ethen, Propen, Butene, Pentene, Hexene, Cyclohexen einsetzt.

4. Verfahren nach mindestens einem der Ansprüche 1 bis 3, **dadurch gekennzeichnet, dass** als Katalysatoren Platin ⁽⁰⁾ -komplexe von Siloxanen, Silanen, Organopolysiloxanen und Organosilanen mit ungesättigten Kohlenwasserstoffresten verwendet werden.

5. Verfahren nach mindestens einem der Ansprüche 1 bis 4, **dadurch gekennzeichnet, dass** als Katalysatoren Platin⁽⁰⁾-komplexe Verbindungen der Formel [H₂C=CH-Si (CH₃) ₂-O-Si (CH₃) ₂₋CH=CH₂]₃ Pt2 eingesetzt werden.

6. Verfahren nach mindestens einem der Ansprüche 1 bis 5, **dadurch gekennzeichnet, dass** man den Pt^{(O)} -Komplexkatalysator gelöst in einem aromatischen Kohlenwasserstoff einsetzt, wobei der Pt^{(O)}-Gehalt der Lösung 0,1 bis 10 Gew.-% beträgt.

7. Verfahren nach mindestens einem der Ansprüche 1 bis 6, **dadurch gekennzeichnet, dass** man den niedermolekularen Kohlenwasserstoff in einer zur Sättigung der Lösung ausreichenden Menge einsetzt.

8. Verfahren nach mindestens einem der Ansprüche 1 bis 7, **dadurch gekennzeichnet, dass** man die Lösung des Katalysators bei Temperaturen, die vorzugsweise im Bereich von ca. 0 °C bis ca. 30 °C liegen, mit mindestens einem der Kohlenwasserstoffe versetzt.

9. Verfahren nach mindestens einem der Ansprüche 1 bis 8, **dadurch gekennzeichnet, dass** man 10⁻² bis 10⁻⁸ Mol, vorzugsweise 10⁻³ bis 10⁻⁶ Mol der Katalysatoren auf jeweils 1 Mol SiH-Gruppen im Silan oder Siloxan einsetzt.

10. Verfahren nach mindestens einem der Ansprüche 1 bis 9, **dadurch gekennzeichnet, dass** man die Hydrosilylierung bei Temperaturen im Bereich von ca. 20 bis ca. 150 °C durchführt.

11. Verfahren nach mindestens einem der Ansprüche 1 bis 10, **dadurch gekennzeichnet, dass** man als H-Si-Gruppen tragende Verbindungen
- monomere Silane, wie z.B. R₃SiH; R₂SiH₂; RSiH₃;
- cyclische Silane, wie z.B. (RHSiO}₄; (RHSiO}₃;
- lineare oder verzweigte oligomere oder polymere Siloxane wie
R₃SiO- (R₂SiO-) ₐ (RSi (H) O-) _{b}SiR₃ wobei a ≥ 0 und b ≥ 1 ist; HR₂SiO-(R₂SiO-}_{c}(RSi(H)O-)_{d}SiR₂H, wobei c und d ≥ O sind;
Verbindungen der allgemeinen Formel 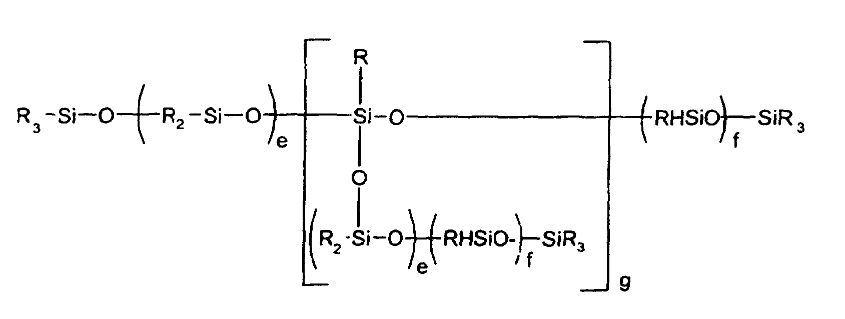
worin
e = ≥ 0,
f = ≥ 1 und
g = ≥ 1 ist,
R gleich oder verschieden Gruppen sind, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe, mitverwendet.

12. Verfahren nach mindestens einem der Ansprüche 1 bis 11, **dadurch gekennzeichnet, dass** man als Verbindungen mit olefinischen Doppelbindungen Verbindungen der Formeln
CH₂=CH-CH₂-O-(CH₂-CH₂O-)x-CH₂-CH(R')O-)_{y} (SO) _{z}-R"
CH₂=CH-O- (CH₂-CH₂O-) ₓ-CH₂-CH (R') O-) _{y}-R"
CH₂=CH-CH₂-R^{IV}
CH₂=CH- (O)_{x'}-R^{IV}
worin
x = 0 bis 100,
x' = 0 oder 1,
y = 0 bis 100,
z = 0 bis 100,
R' e ine gegebenenfalls substituierte Alkylgruppe mit 1 bis 4 C-Atomen ist und
R" einen Wasserstoffrest oder eine Alkylgruppe mit 1 bis 4 C-Atomen; die Gruppe -C(O)-R'" mit R'" = Alkylrest;
die Gruppe -CH₂-O-R'; eine Alkylarylgruppe, wie die Benzylgruppe; die Gruppe -C(O)NH-R' bedeutet,
R^{IV} ein gegebenenfalls substituierter Kohlenwasserstoffrest mit 7 bis 47, vorzugsweise 13 bis 37 C-Atomen,
SO der Rest C₆H₅-CH(-)-CH₂-O- bedeutet, mitverwendet.

13. Verfahren zur Aktivierung von Platin⁽⁰⁾-Komplexkatalysatoren, **dadurch gekennzeichnet, dass** Lösungen dieser Katalysatoren mit einer wirksamen Menge mindestens eines ungesättigten Kohlenwasserstoffes mit 1 bis 6 C-Atomen versetzt werden.

14. Aktivierte Platin⁽⁰⁾-Komplexkatalysatoren, hergestellt gemäß dem Verfahren nach Anspruch 13.

## Revendications

1. Procédé de préparation de polyorganosiloxanes et de polyorganosilanes de pureté élevée par addition de siloxanes et/ou de silanes, qui contiennent au moins un groupement H-Si, sur des composés avec des doubles liaisons oléfiniques en présence d'un catalyseur de platine et le cas échéant d'autres composants supplémentaires, **caractérisé en ce qu'**on réalise la transformation en présence d'un catalyseur complexe de platine ⁽⁰⁾ qui est dissous avant l'addition dans le mélange réactionnel dans un solvant et dont la solution est mélangée avec une quantité active d'au moins d'un hydrocarbure insaturé comprenant 2 à 6 atomes de carbone.

2. Procédé selon la revendication 1, **caractérisé en ce qu'**on utilise comme hydrocarbures insaturés des oléfines de bas poids moléculaire, exemptes de Si, comprenant 2 à 6 atomes de carbone, qui sont exemptes de substituants attracteurs d'électrons.

3. Procédé selon au moins l'une quelconque des revendications 1 ou 2, **caractérisé en ce qu'**on utilise comme hydrocarbures insaturés l'éthylène, le propylène, le butylène, le pentène, l'hexène, le cyclohexène.

4. Procédé selon au moins l'une quelconque des revendications 1 à 3, **caractérisé en ce qu'**on utilise comme catalyseurs des complexes de platine ⁽⁰⁾ et de siloxanes, de silanes, d'organopolysiloxanes et d'organosilanes avec des radicaux hydrocarbonés insaturés.

5. Procédé selon au moins l'une quelconque des revendications 1 à 4, **caractérisé en ce qu'**on utilise comme catalyseurs des composés complexes de platine ⁽⁰⁾ de formule [H₂C=CH-Si (CH₃)₂-O-Si (CH₃)₂-CH=CH₂]₃Pt₂.

6. Procédé selon au moins l'une quelconque des revendications 1 à 5, **caractérisé en ce qu'**on utilise le catalyseur complexe de Pt ⁽⁰⁾ sous forme dissoute dans un hydrocarbure aromatique, la teneur en Pt⁽⁰⁾ de la solution étant de 0,1 à 10% en poids.

7. Procédé selon au moins l'une quelconque des revendications 1 à 6, **caractérisé en ce qu'**on utilise un hydrocarbure de bas poids moléculaire en une quantité suffisante pour la saturation de la solution.

8. Procédé selon au moins l'une quelconque des revendications 1 à 7, **caractérisé en ce qu'**on mélange la solution du catalyseur à des températures, qui se situent de préférence dans la plage d'environ 0°C à environ 30°C, avec au moins un des hydrocarbures.

9. Procédé selon au moins l'une quelconque des revendications 1 à 8, **caractérisé en ce qu'**on utilise 10⁻² à 10⁻⁸ mole, de préférence 10⁻³ à 10⁻⁶ mole des catalyseurs à chaque fois par rapport à une mole de groupements SiH dans le silane ou le siloxane.

10. Procédé selon au moins l'une quelconque des revendications 1 à 9, **caractérisé en ce qu'**on réalise l'hydrosilylation à des températures dans la plage d'environ 20 à environ 150°C.

11. Procédé selon au moins l'une quelconque des revendications 1 à 10, **caractérisé en ce qu'**on utilise conjointement comme composés portant des groupements SiH
- des silanes monomères, tels que par exemple R₃SiH ; R₂SiH₂ ; RSiH₃ ;
- des silanes cycliques, tels que par exemple (RHSiO)₄, (RHSiO)₃,
- des siloxanes oligomères ou polymères linéaires ou ramifiés, tels que R₃SiO-(R₂SiO-)ₐ(RSi(H)O-)_{b}SiR₃ où a ≥ 0 et b ≥ 1 ; HR₂SiO- (R₂SiO-)_{c}(RSi(H)O-)_{d}SiR₂H, c et d étant ≥ 0 ;
- des composés de formule générale 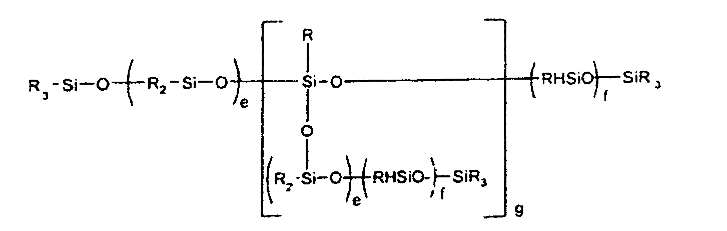
dans laquelle
e ≥ 0,
f ≥ 1 et
g ≥ 1,
les radicaux R représentent des groupements identiques ou différents qui n'empêchent pas la réaction d'addition, tels que les groupements alkyle comprenant 1 à 8 atomes de carbone, les groupements alkyle substitués comprenant 1 à 8 atomes de carbone, tels que le groupement 3-chloropropyle, 1-chlorométhyle, 3-cyanopropyle ; les groupements aryle, tels que le groupement phényle ; les groupements aralkyle, tels que le groupement benzyle ; les groupements alcoxy ou alcoxyalkyle, tels que le groupement éthoxy ou éthoxypropyle.

12. Procédé selon au moins l'une quelconque des revendications 1 à 11, **caractérisé en ce qu'**on utilise conjointement comme composés avec des doubles liaisons oléfiniques des composés de formules
CH₂=CH-CH₂-O- (CH₂-CH₂O-)ₓ-CH₂-CH(R') O-)_{y}(SO)_{z}-R"
CH₂=CH-O- (CH₂-CH₂O-)ₓ-CH₂-CH(R')O-)_{y}-R"
CH₂=CH-CH₂-R^{IV}
CH₂=CH-(O)_{x'}-R^{IV}
dans lesquelles
x = 0 à 100,
x' = 0 ou 1,
y = 0 à 100,
z = 0 à 100,
R' représente un groupement alkyle le cas échéant substitué, comprenant 1 à 4 atomes de carbone et
R" représente un radical hydrogène ou un groupement alkyle comprenant 1 à 4 atomes de carbone ; le groupement -C(O)-R''' avec R''' = un radical alkyle ;
le groupement -CH₂-O-R' ; un groupement alkylaryle, tel que le groupement benzyle ; le groupement -C(O)NH-R',
R^{IV} représente un radical hydrocarboné le cas échéant substitué comprenant 7 à 47, de préférence 13 à 37 atomes de carbone,
SO représente le radical C₆H₅-CH(-)-CH₂-O-.

13. Procédé pour l'activation de catalyseurs complexes de platine ⁽⁰⁾, **caractérisé en ce que** des solutions de ces catalyseurs sont mélangées avec une quantité active d'au moins un hydrocarbure insaturé comprenant 1 à 6 atomes de carbone.

14. Catalyseurs complexes activés de platine ⁽⁰⁾, préparés selon le procédé de la revendication 13.

## Claims

1. Process for the preparation of polyorganosiloxanes and polyorganosilanes of high purity by an addition reaction of siloxanes and/or silanes which contain at least one H-Si group with compounds having olefinic double bonds in the presence of a platinum catalyst and optionally further additional components, **characterized in that** the reaction is carried out in the presence of a platinum⁽⁰⁾ complex catalyst which was dissolved in a solvent before addition to the reaction medium and to whose solution an effective amount of at least one unsaturated hydrocarbon having 2 to 6 C atoms was added.

2. Process according to Claim 1, **characterized in that** unsaturated hydrocarbons used are low molecular weight Si-free olefins having 2 to 6 carbon atoms which are free of electron-attracting substituents.

3. Process according to at least one of Claims 1 and 2, **characterized in that** unsaturated hydrocarbons used are ethene, propene, butenes, pentenes, hexenes or cyclohexene.

4. Process according to at least one of Claims 1 to 3, **characterized in that** catalysts used are platinum⁽⁰⁾ complexes of siloxanes, silanes, organopolysiloxanes and organosilanes with unsaturated hydrocarbon radicals.

5. Process according to at least one of Claims 1 to 4, **characterized in that** catalysts used are platinum⁽⁰⁾ complex compounds of the formula [H₂C=CH-Si(CH₃)₂-O-Si (CH₃)₂-CH=CH₂]₃Pt₂.

6. Process according to at least one of Claims 1 to 5, **characterized in that** the Pt ^{(O)} complex catalyst is used in solution in an aromatic hydrocarbon, the Pt ^{(O)} content of the solution being from 0.1 to 10% by weight.

7. Process according to at least one of Claims 1 to 6, **characterized in that** the low molecular weight hydrocarbon is used in an amount sufficient for saturating the solution.

8. Process according to at least one of Claims 1 to 7, **characterized in that** at least one of the hydrocarbons is added to the solution of the catalyst at temperatures which are preferably in the range from about 0°C to about 30°C.

9. Process according to at least one of Claims 1 to 8, **characterized in that** from 10⁻² to 10⁻⁸ mol, preferably from 10⁻³ to 10⁻⁶ mol, of the catalysts is used in each case per mole of SiH groups in the silane or siloxane.

10. Process according to at least one of Claims 1 to 9, **characterized in that** the hydrosilylation is carried out at temperatures in the range from about 20 to about 150°C.

11. Process according to at least one of Claims 1 to 10,
**characterized in that**
- monomeric silanes, such as, for example, R₃SiH; R₂SiH₂; RSiH₃;
- cyclic silanes, such as, for example, (RHSiO}₄; (RHSiO}₃;
- linear or branched oligomeric or polymeric siloxanes, such as
R₃SiO- (R₂SiO-)ₐ (RSi (H) O-) _{b}SiR₃ in which a is ≥ 0 and b is ≥ 1; HR₂SiO-(R₂SiO-}_{c}(RSi(H)O-)_{d}SiR₂H, in which c and d are ≥ 0;
compounds of the general formula 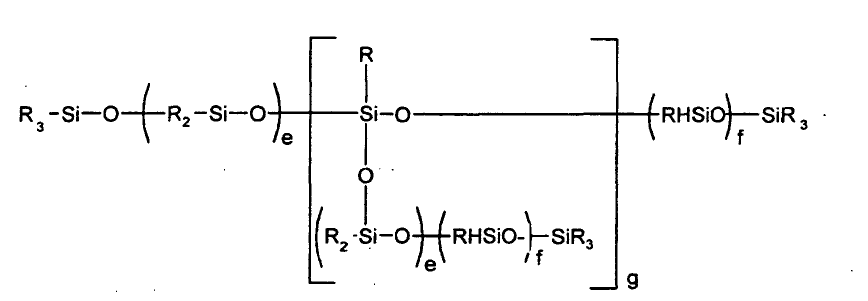
in which
e is ≥ 0,
f is ≥ 1 and
g is ≥ 1,
R are identical or different groups which do not hinder the addition reaction, such as alkyl groups having 1 to 8 carbon atoms; substituted alkyl groups having 1 to 8 carbon atoms, such as the 3-chloropropyl, 1-chloromethyl or 3-cyanopropyl group; aryl groups, such as the phenyl group; aralkyl groups, such as the benzyl group; alkoxy or alkoxyalkyl groups, such as the ethoxy or ethoxypropyl group,
are concomitantly used as compounds carrying H-Si groups.

12. Process according to at least one of Claims 1 to 11, **characterized in that** compounds of the formulae
CH₂=CH-CH₂-O-(CH₂-CH₂O-)ₓ-CH₂-CH(R') O-)_{y} (SO)_{z}-R"
CH₂=CH-O- (CH₂-CH₂O-)ₓ-CH₂-CH (R') O-)_{y}-R"
CH₂=CH-CH₂-R^{IV}
CH₂=CH- (O)_{x'}-R^{IV}
in which
x = 0 to 100,
x' = 0 or 1,
y = 0 to 100,
z = 0 to 100,
R' is an optionally substituted alkyl group having 1 to 4 carbon atoms and
R" is a hydrogen radical or an alkyl group having 1 to 4 carbon atoms; the group -C (O) -R"' in which R"' = alkyl radical;
the group -CH₂-O-R'; an alkylaryl group, such as the benzyl group; the group -C(O)NH-R',
R^{IV} is an optionally substituted hydrocarbon radical having 7 to 47, preferably 13 to 37, carbon atoms, and
SO is the radical C₆H₅-CH(-)-CH₂-O-,
are concomitantly used as compounds having olefinic double bonds.

13. Process for the activation of platinum⁽⁰⁾ complex catalysts, **characterized in that** an effective amount of at least one unsaturated hydrocarbon having 1 to 6 carbon atoms is added to solutions of these catalysts.

14. Activated platinum⁽⁰⁾ complex catalyst prepared by the process according to Claim 13.
